(19) Europäisches Patentamt / European Patent Office / Office européen des brevets

(11) **EP 3 651 408 B1**

(12) **FASCICULE DE BREVET EUROPEEN**

(45) Date de publication et mention
de la délivrance du brevet:
**05.06.2024 Bulletin 2024/23**

(21) Numéro de dépôt: **19220243.0**

(22) Date de dépôt: **09.11.2016**

(51) Classification Internationale des Brevets (IPC):
*H04L 9/32* *(2006.01)*   *H04L 9/30* *(2006.01)*
*H04W 12/04* *(2021.01)*   *H04W 12/02* *(2009.01)*
*H04W 12/30* *(2021.01)*   *H04W 12/40* *(2021.01)*
*H04W 12/75* *(2021.01)*

(52) Classification Coopérative des Brevets (CPC):
**H04L 9/3073; H04L 9/3239; H04L 9/3255;
H04W 12/02; H04W 12/04; H04W 12/35;**
H04L 2209/42; H04W 12/40; H04W 12/75

(54) **PROCÉDÉ D'IDENTIFICATION ANONYME D'UN MODULE DE SÉCURITÉ**

VERFAHREN ZUR ANONYMEN IDENTIFIKATION EINES SICHERHEITSMODULS

METHOD OF ANONYMOUS IDENTIFICATION OF A SECURITY MODULE

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **23.11.2015 FR 1561268**

(43) Date de publication de la demande:
**13.05.2020 Bulletin 2020/20**

(62) Numéro(s) de document de la (des) demande(s)
initiale(s) en application de l'article 76 CBE:
**16809970.3 / 3 381 152**

(73) Titulaire: **Orange
92130 Issy-les-Moulineaux (FR)**

(72) Inventeurs:
• **BARKI, Amira
92326 CHÂTILLON CEDEX (FR)**
• **GHAROUT, Saïd
92326 CHÂTILLON CEDEX (FR)**
• **TRAORE, Jacques
92326 CHÂTILLON CEDEX (FR)**
• **COUREAU, Laurent
92326 CHÂTILLON CEDEX (FR)**

(74) Mandataire: **Plasseraud IP
66, rue de la Chaussée d'Antin
75440 Paris Cedex 09 (FR)**

(56) Documents cités:
**EP-A2- 2 012 248     US-A1- 2009 253 409
US-A1- 2013 297 422**

• **Elaheh Vahidian: "Evolution of the SIM to eSIM", ,
21 janvier 2013 (2013-01-21), XP055249025,
Extrait de l'Internet:
URL:http://www.diva-portal.org/smash/get/d
iva2:617036/FULLTEXT01.pdf [extrait le
2016-02-10]**

**Description**

La présente invention concerne un procédé d'identification anonyme d'un module de sécurité lors d'une souscription auprès d'un opérateur de télécommunications.

Elle trouve une application particulièrement intéressante dans le cadre de l'utilisation de modules de sécurité embarqués dans un équipement mobile grand public et plus particulièrement lors d'une souscription auprès d'un opérateur de réseau mobile, ou d'un changement d'opérateur.

L'association des opérateurs de téléphonie mobile, ou « GSMA » (de l'anglais « Global System for Mobile Communications ») a annoncé le développement d'un standard de carte « SIM » (de l'anglais « Subscriber Identity Module ») embarquée, ou « eSIM », de type « eUICC » (de l'anglais « embedded Universal Integrated Circuit Card ») pour des équipements mobiles grand public, tels qu'un terminal mobile ou une tablette. Une carte SIM embarquée est destinée à être inamovible et (re)programmée à distance. Ainsi, lors de l'acquisition d'un nouvel équipement mobile, il n'est plus nécessaire de manipuler au préalable la carte SIM afin d'accéder au réseau d'un opérateur, voire de la changer lors d'un changement d'opérateur. Il est prévu qu'un utilisateur s'abonne directement via l'écran de son équipement mobile, ou en se rendant dans une boutique de l'opérateur ou/et qu'il installe un profil supplémentaire d'accès au réseau sur un équipement secondaire. Il est également prévu qu'il change d'opérateur de la même façon. Une carte eSIM est identifiée de façon unique au moyen d'un identifiant de module ou « EID » (pour « eUICC Identifier »), qui constitue un identifiant physique de la carte, défini en usine. Cet identifiant n'est pas modifiable.

Dans le cadre des équipements mobiles grand public, il est possible qu'aucun profil initial d'accès à un réseau mobile ne soit installé en usine. L'équipement n'a donc de base, aucune possibilité d'accéder à la voie radio. Il est envisageable, lors de la souscription d'un abonnement auprès d'un opérateur de réseau mobile de gérer dans un serveur intermédiaire du réseau indépendant des opérateurs une correspondance entre l'identifiant de la carte eSIM et l'opérateur auprès duquel l'abonnement a été souscrit et pour lequel l'opérateur tient à disposition un profil d'accès qu'il a généré pour la carte eSIM. Ainsi, lorsqu'un équipement mobile souhaite obtenir un profil d'accès au réseau suite à une souscription auprès d'un opérateur, il s'adresse au serveur intermédiaire qui identifie, sur la base de l'identifiant de la carte eSIM de l'équipement mobile, l'opérateur qui a généré un profil pour cet équipement. Le serveur intermédiaire envoie alors à l'équipement mobile l'adresse d'un serveur de gestion de l'opérateur auprès duquel il peut obtenir son profil. L'équipement mobile peut alors établir une connexion avec le serveur de gestion de l'opérateur dans un réseau de données tel qu'Internet de manière à récupérer son profil et l'installer dans la carte eSIM.

Une telle solution offre une certaine souplesse dans la gestion d'abonnements par l'utilisateur qui peut facilement commander depuis son équipement mobile l'activation d'une souscription, ou d'une nouvelle souscription dans le cas d'un changement d'opérateur. Cependant, cette gestion pose de sérieux problèmes de respect de la vie privée de l'utilisateur. En effet, le serveur intermédiaire du réseau qui stocke les correspondances entre identifiant de carte eSIM et adresse d'un serveur de gestion de l'opérateur qui a généré le profil d'accès au réseau connaît à un instant donné l'opérateur associé à une carte eSIM. Il est en outre capable de tracer tous les changements de souscription de la carte eSIM au cours de la vie de la carte eSIM.

Les documents US 2009/253409 A1 (SLAVOV KRISTIAN [FI] ET AL) 8 octobre 2009 (2009-10-08) et US 2013/297422 A1 (HUNTER KEVIN E [US] ET AL) 7 novembre 2013 (2013-11-07) sont des documents pertinents de l'état de l'art.

Un des buts de l'invention est de remédier à des insuffisances/inconvénients de l'état de la technique et/ou d'y apporter des améliorations.

A cette fin, l'invention propose un procédé d'obtention d'une adresse de serveur de gestion de données de souscription d'un opérateur selon la revendication indépendante 1.

Avec le procédé décrit ici, une valeur d'identification qui est associée au module de sécurité est décorrélée de l'identifiant physique du module. Ainsi, le serveur du réseau qui reçoit une telle valeur d'identification afin d'identifier l'adresse d'un serveur de gestion de données à contacter pour obtenir un profil d'accès au réseau ne peut identifier le module de sécurité qui se cache derrière la valeur d'identification. L'anonymat du module de sécurité est ainsi préservé.

Par ailleurs, la valeur d'identification associée à un module de sécurité évolue dans le temps puisque son calcul prend en compte une date. Une première valeur d'identification, générée pour un module à une première date lors de la souscription d'un abonnement auprès d'un premier opérateur et une deuxième valeur d'identification, générée pour le même module à une deuxième date, lors de la souscription par exemple d'un abonnement auprès d'un deuxième opérateur, sont donc nécessairement différentes. Ainsi, il n'est pas possible pour le serveur de tracer les souscriptions successives d'un module de sécurité lors d'un changement d'opérateur.

L'anonymat et la non traçabilité contribuent au respect de la vie privée de l'utilisateur détenteur de l'équipement mobile qui comprend le module de sécurité.

Par ailleurs, la recherche de la valeur d'identification courante du module de sécurité dans la liste des valeurs d'identification permet de tenir compte d'une période de validité du profil d'accès au réseau. En effet, si la recherche de la valeur d'identification courante d'un module de sécurité dans la liste des valeurs d'identification stockée par le serveur échoue, bien qu'un abonnement ait été souscrit précédemment pour l'équipement mobile qui comprend le module de sécurité, cela peut signifier que le profil n'est plus disponible. Une période de validité est en effet associée à un profil d'accès au réseau et il n'est pas possible d'obtenir le profil au-delà de cette période de validité. La valeur d'identification courante du module tenant compte de la date courante, elle peut donc ne pas être présente dans la liste des valeurs d'identification associée au module de sécurité dès lors que la date courante a dépassé la période de validité du profil. Cela évite des requêtes inutiles au serveur de gestion de données de souscription de l'opérateur et une gestion spécifique de la période de validité du profil.

L'invention porte également sur un procédé de transmission par un serveur de gestion de données de souscription d'un opérateur d'au moins un ensemble de valeurs d'identification anonymisées associé à un opérateur pour un module de sécurité, selon la revendication indépendante 2, ledit procédé mis en oeuvre par le serveur de gestion de données de souscription comprenant :

- obtention d'un identifiant d'un module de sécurité à une date de souscription d'un abonnement auprès de l'opérateur,
- génération pour ledit module de sécurité d'un ensemble de valeurs d'identification anonymisées, une valeur d'identification anonymisée de l'ensemble étant calculée à partir de l'identifiant du module de sécurité et d'une date variant dans une plage temporelle comprise entre une date initiale, représentative de la date de souscription de l'abonnement auprès dudit opérateur, et d'une date finale représentative d'une date de fin de validité d'un profil d'accès au réseau associé à l'abonnement souscrit, et envoi dudit ensemble de valeurs d'identification anonymisées à un deuxième serveur, ledit deuxième serveur étant en charge de vérifier la présence d'une valeur d'identification anonyme courante reçue d'un module de sécurité dans ledit ensemble (S) de valeurs d'identification anonymisées, la présence de ladite valeur d'identification anonyme courante dans ledit ensemble indiquant qu'une requête de demande d'adresse d'un serveur de données de souscription a été émise durant la période de validité d'un profil d'accès à un réseau et déclenchant l'envoi au module de sécurité de l'adresse d'un serveur de gestion de l'opérateur auprès duquel le module de sécurité peut télécharger le profil d'accès au réseau.

Lors de la souscription d'un abonnement auprès d'un opérateur depuis un équipement mobile, le serveur de gestion des données de souscription génère un ensemble de valeurs d'identification anonymes propres au module compris dans l'équipement qui tient compte de la période de validité du profil au-delà de laquelle le profil n'est plus valide. Cet ensemble comprend ainsi l'ensemble des valeurs d'identification susceptibles d'être reçues du module de sécurité dans une demande d'adresse de serveur de gestion de données de souscription de l'opérateur en tant que valeur d'identification courante.

Dans un exemple de réalisation, l'ensemble S de valeurs d'identification anonymisées est généré comme suit : $S = \{H(d_s)^{EID'} \bmod p, H(d_s + 1)^{EID'} \bmod p, ..., H(d_s + n)^{EID'} \bmod p\}$, où $d_s$ représente la date initiale, $d_s + n$ la date finale $d_\varepsilon$, EID' un identifiant dérivé de l'identifiant du module de sécurité, H une fonction de hachage, p un nombre premier très grand.

Le calcul d'une valeur d'identification du module, que ce soit une valeur d'identification courante ou une valeur d'identification de la liste des valeurs d'identification garantit un niveau de sécurité élevé. En effet, une telle formule peut être ramenée à un problème connu dit du logarithme discret et réputé difficile à résoudre en un temps raisonnable. Ainsi, trouver l'exposant, ici EID', en connaissant le haché de la date est un problème difficile. La propriété d'anonymat des modules de sécurité est ainsi prouvée mathématiquement. De même, si l'on dispose de deux valeurs, $H(d_1)^{EID1'}$ et $H(d_2)^{EID2'}$, il n'est pas possible de savoir si $EID_1' = EID_2'$. Résoudre un tel problème reviendrait à résoudre le problème décisionnel de Diffie-Hellman (ou « DDH », pour « Decisional Diffie-Hellman » en anglais), réputé difficile. Ainsi, le serveur ne peut pas établir de lien entre des demandes d'adresses de serveur émanant d'un même module de sécurité ou entre deux listes de valeurs d'identification. Le serveur peut recevoir de telles demandes lors de souscription à différents opérateurs. Ainsi, la propriété de non traçabilité est prouvée mathématiquement.

Dans un exemple de réalisation, l'identifiant anonyme courant reçu a été calculé en fonction de l'identifiant du module de sécurité et d'une date courante $d_c$ comme suit : $ID_c = H(d_c)^{EID'} \bmod p$.

Dans un exemple de réalisation, l'ensemble S de valeurs d'identification anonymisées est généré comme suit : $S = \{H((EID'' \oplus opad) \| H((EID'' \oplus ipad) \| d_s))), H((EID'' \oplus opad) \| H((EID'' \oplus ipad) \| d_s + 1 ))), ..., H((EID'' \oplus opad) \| H((EID'' \oplus ipad) \| d_s + n)))\}$, où « $\|$ » représente l'opérateur de concaténation, EID'' un identifiant obtenu en ajoutant des '0' à un identifiant dérivé EID' de l'identifiant EID du module de sécurité afin d'obtenir un identifiant de la taille d'un bloc de la fonction de hachage H, ipad et opad sont construits en répétant respectivement les octets '0x36' et '0x5c' jusqu'à l'obtention d'un bloc de la fonction de hachage H.

Dans un exemple de réalisation, l'identifiant courant $ID_c$ a été calculé pour une date courante $d_c$ comme suit : $ID_c = H((EID'' \oplus opad) \| H((EID'' \oplus ipad) \| d_c )))$.

Dans un exemple de réalisation, l'identifiant dérivé EID' comprend au moins 160 bits. Cet exemple de réalisation tient compte du fait que le format d'un identifiant de module de sécurité peut comprendre moins de 160 bits. On estime que 160 bits est une taille suffisante pour garantir les propriétés d'anonymat et de non traçabilité. On estime qu'actuellement la valeur idéale est de 256 bits.

Dans un exemple de réalisation, l'identifiant dérivé EID' du module de sécurité est obtenu en concaténant l'identifiant EID du module à une valeur aléatoire comprenant le nombre de bits requis.

L'invention concerne également un module de sécurité selon la revendication indépendante 10

L'invention concerne aussi un programme d'ordinateur sur un support de données et chargeable dans la mémoire d'un module de sécurité, le programme comprenant des portions de code pour l'exécution des étapes du procédé d'obtention d'une adresse de serveur de gestion de données de souscription d'un opérateur par un module de sécurité équipant un équipement mobile tel que décrit précédemment, lorsque le programme est exécuté sur ledit module. L'invention porte également sur un serveur de gestion de données de souscription d'un opérateur selon la revendication indépendante 12, comprenant :

- des moyens d'obtention d'un identifiant, agencés pour obtenir un identifiant d'un module de sécurité à une date de souscription d'un abonnement auprès de l'opérateur,
- des moyens de génération, agencés pour générer pour ledit module de sécurité un ensemble de valeurs d'identification anonymisées, une valeur d'identification anonymisée de l'ensemble étant calculée à partir de l'identifiant du module et d'une date variant dans une plage temporelle comprise entre une date initiale, représentative de la date de souscription de l'abonnement auprès dudit opérateur, et d'une date finale représentative d'une date de fin de validité d'un profil d'accès au réseau associé à l'abonnement souscrit,
- des moyens d'envoi, agencés pour envoyer ledit ensemble de valeurs d'identification anonymisées à un deuxième serveur, ledit deuxième serveur étant en charge de vérifier la présence d'une valeur d'identification anonyme courante reçue d'un module de sécurité dans ledit ensemble (S) de valeurs d'identification anonymisées, la présence de ladite valeur d'identification anonyme courante dans ledit ensemble indiquant qu'une requête de demande d'adresse d'un serveur de données de souscription a été émise durant la période de validité du profil d'accès à un

réseau et déclenchant l'envoi au module de sécurité de l'adresse d'un serveur de gestion de l'opérateur auprès duquel le module de sécurité peut télécharger le profil d'accès au réseau associé à l'abonnement souscrit.

L'invention concerne aussi un programme d'ordinateur sur un support de données et chargeable dans la mémoire d'un ordinateur, le programme comprenant des portions de code pour l'exécution des étapes du procédé de transmission par un serveur de gestion de données de souscription d'un opérateur d'au moins un ensemble de valeurs d'identification anonymisées associé à un opérateur pour un module de sécurité tel que décrit précédemment, lorsque le programme est exécuté sur ledit ordinateur.

D'autres caractéristiques et avantages de la présente invention seront mieux compris de la description et des dessins annexés parmi lesquels :

- la figure 1 présente les étapes d'un procédé d'identification anonyme d'un module de sécurité, selon un exemple de réalisation ;
- la figure 2 est une représentation schématique d'un serveur de découverte, selon un exemple de réalisation.

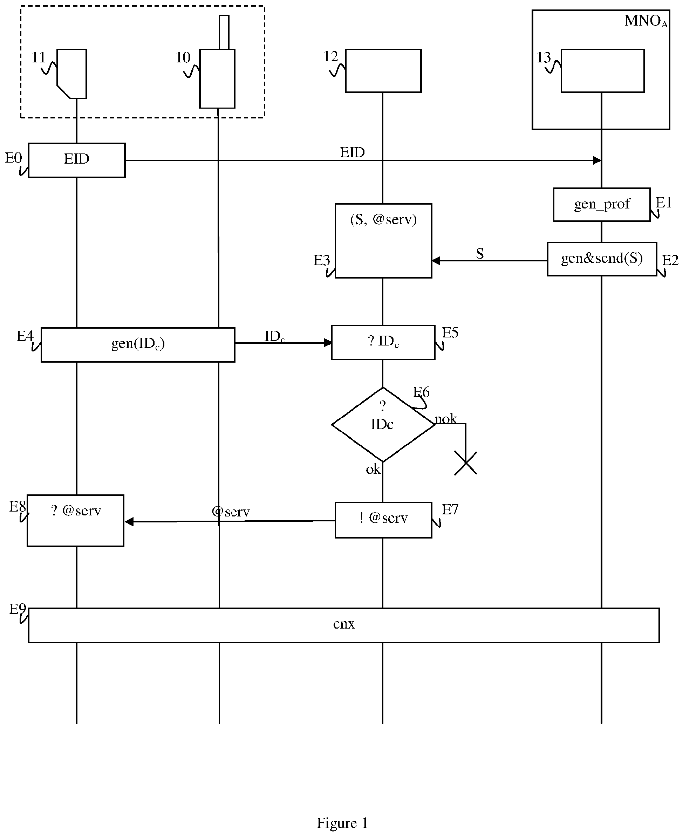

Les étapes d'un procédé d'identification anonyme d'un module de sécurité, selon un exemple de réalisation vont maintenant être décrites en relation avec la figure 1.

Un équipement mobile 10, par exemple un terminal mobile ou une tablette, équipé d'un module de sécurité 11 est agencé pour accéder au réseau d'un opérateur mobile $MNO_A$ au moyen d'un profil d'accès au réseau généré par cet opérateur pour ce module. Plus précisément, le profil est généré pour ce module par un serveur de gestion de données de souscription lié à l'opérateur. Le profil comprend une application d'accès au réseau et des données d'accès associées (on parle de « credentials » en anglais), telles que des clés cryptographiques et des algorithmes. Le profil permet d'authentifier l'équipement mobile 10, plus précisément le module de sécurité 11 lors d'un accès au réseau de l'opérateur $MNO_A$.

Le module de sécurité 11 est typiquement une carte « eSIM » (de l'anglais « embedded Subscriber Identity Module »), ou carte SIM inamovible, de type « eUICC » (de l'anglais « embedded Universal Integrated Circuit Card »). Un tel module de sécurité est identifié de façon unique au moyen d'un identifiant de module « EID » (pour « eUICC Identifier »), qui constitue un identifiant physique de la carte, défini en usine et non modifiable. Lorsqu'un équipement mobile est équipé d'un module de sécurité de type carte eSIM, l'utilisateur de l'équipement mobile 10 peut commander, via une interface de l'équipement mobile ou lors d'une souscription dans une boutique de l'opérateur, le téléchargement du profil dans le module de sécurité 11. Ce mode de fonctionnement offre une certaine souplesse lors d'une souscription initiale, ou lors d'un changement d'opérateur.

Un serveur de découverte 12, est un équipement intermédiaire situé dans un réseau de données tel que le réseau Internet. Le serveur de découverte 12 est agencé pour recevoir d'opérateurs, par exemple de l'opérateur $MNO_A$, et plus précisément d'un serveur 13 de gestion de données de souscription de l'opérateur, une information qu'un profil d'accès au réseau de l'opérateur a été généré pour un module de sécurité, par exemple le module 11, et pour enregistrer l'adresse du serveur 13 de gestion de données de souscription de l'opérateur auprès duquel le profil peut être obtenu en association avec une liste de valeurs d'identification anonymisées propres au module de sécurité 11 pour lequel le profil a été généré. Le serveur 12 est également agencé pour recevoir des demandes d'adresse d'un serveur de gestion de données de souscription d'un opérateur en provenance d'équipements mobiles, plus précisément des modules de sécurité compris dans les équipements mobiles. A cette fin, l'adresse Internet du serveur de découverte 12 est installée en usine dans l'équipement mobile 10. En variante, l'adresse du serveur 12 est installée en usine dans le module de sécurité 11. Le serveur de découverte 12 est également agencé pour fournir, en réponse à une requête de demande d'adresse d'un serveur de gestion de données de souscription émanant de l'équipement mobile 10, l'adresse du serveur 13 de gestion des données de souscription d'un opérateur, ici l'opérateur MNO$_A$. Le serveur 13 de gestion des données de souscription est agencé pour générer, suite à une souscription auprès de l'opérateur MNO$_A$, le profil d'accès au réseau de l'opérateur pour le module 11. Le module de sécurité 11 est agencé pour se connecter, via l'équipement mobile 10 au serveur 13 de gestion des données de souscription de l'opérateur, après avoir obtenu son adresse du serveur de découverte 12, afin de télécharger le profil d'accès au réseau de l'opérateur MNO$_A$. Le serveur de découverte 12 est indépendant des opérateurs de réseau et reçoit l'ensemble des requêtes de demande d'adresse de serveur de gestion de données de souscription en provenance des modules de sécurité, tout opérateur confondu.

On suppose que dans une étape initiale E0, un utilisateur, détenteur de l'équipement mobile 10 souscrit un nouvel abonnement auprès de l'opérateur MNO$_A$. La nouvelle souscription est par exemple une souscription initiale, consécutive à l'achat de l'équipement mobile 10, ou, lorsque l'utilisateur possède déjà une souscription à un premier opérateur, une souscription auprès d'un deuxième opérateur. Par exemple, l'utilisateur de l'équipement mobile 10 se rend dans une agence de l'opérateur MNO$_A$ et fournit à l'opérateur l'identifiant EID de son module de sécurité 11. L'identifiant EID du module 11 est par exemple scanné sur l'équipement mobile 10 et transmis au serveur 13 de gestion de données de souscription de l'opérateur MNO$_A$.

Dans une étape E1 de génération de profil, le serveur 13 de gestion de données de souscription de l'opérateur MNO$_A$ génère un profil d'accès au réseau de l'opérateur MNO$_A$ pour l'équipement mobile 10, plus précisément pour le module de sécurité 11.

Dans une étape suivante E2 de génération et d'envoi d'un ensemble de valeurs d'identification, le serveur 13 de gestion des données de souscription de l'opérateur commande la génération d'un ensemble S de données d'identification anonymisées, propres au module de sécurité 11. Une donnée d'identification anonymisée propre au module de sécurité 11 est calculée à partir de l'identifiant EID du module de sécurité 11 et d'une date. La date varie dans une plage temporelle comprise entre une date initiale $d_s$, représentative de la date de souscription de l'abonnement auprès de l'opérateur MNO$_A$ et une date finale $d_\varepsilon$, représentative d'une date de fin de validité du profil. L'ensemble S de valeurs d'identification anonymisées comprend ainsi autant de valeurs que de dates comprises dans la plage. La plage temporelle comprise entre la date initiale $d_s$ et la date de finale $d_\varepsilon$ définit une période de temps pendant laquelle il est possible de télécharger le profil sur le module de sécurité 13 une fois l'abonnement souscrit. En effet, on considère que le profil n'est plus valide s'il n'a pas été téléchargé sur le module de sécurité 11 au-delà de la date finale $d_\varepsilon$. La granularité de la date est paramétrable. Dans un exemple de réalisation, la date est un jour calendaire ; il n'est pas tenu compte des heures, des minutes et des secondes. L'ensemble S contient ainsi autant de valeurs d'identification que de jours compris entre la date initiale $d_s$ et la date finale $d_\varepsilon$. L'invention n'est pas limitée à cet exemple. Ainsi, la date peut correspondre à une semaine, un mois, voire à une heure.

Dans un premier exemple de réalisation, l'ensemble S est généré comme suit :
S = {H($d_s$)$^{EID'}$ mod p, H($d_s$ + 1)$^{EID'}$ mod p, H($d_s$ + 2)$^{EID'}$ mod p, ..., H($d_s$ + n)$^{EID'}$ mod p}, où $d_s$ représente la date de souscription de l'abonnement, $d_s$ + n la date finale $d_\varepsilon$, EID' un identifiant dérivé de EID, H une fonction de hachage et p un nombre premier très grand, par exemple 2048 bits dans l'arithmétique modulaire. Dans cet exemple, la date est un jour calendaire. La fonction de hachage H est par exemple la fonction SHA-3, ou la fonction SHA-256. L'invention n'est bien sûr pas limitée à ces fonctions de hachage.

Dans un exemple de réalisation, l'identifiant dérivé EID' est égal à l'identifiant EID du module de sécurité 11.

Dans un autre exemple de réalisation, l'identifiant EID' est dérivé de EID et comporte au moins 160 bits. Par exemple, l'identifiant dérivé EID' est obtenu en concaténant l'identifiant EID du module de sécurité 11 à une valeur aléatoire, partagée avec le module de sécurité 11, qui comprend le nombre de bits requis. La valeur aléatoire peut être générée par un fabricant de module de sécurité, ou encarteur, et préalablement installée en usine dans le module de sécurité 11. Dans ce cas, au cours de l'étape initiale E0, l'identifiant EID du module de sécurité 11 et la valeur aléatoire sont fournis à l'opérateur. Dans cet exemple, il est possible de prouver la sécurité des valeurs d'identification anonymisées calculées dans le sens où, connaissant H($d_i$)$^{EID'}$ mod p, avec $d_s \le d_i \le d_f$, il n'est pas possible de retrouver EID'. En d'autres termes, connaissant une valeur d'identification anonymisée, il n'est pas possible de retrouver l'identifiant EID' du module de sécurité 11 associé. Une telle formule peut en effet être associée à un problème connu dit du logarithme discret et réputé difficile à résoudre en un temps raisonnable. Ainsi, la propriété d'anonymat est prouvée mathématiquement. De même, connaissant deux valeurs d'identification H($d_1$)$^{EID'1}$ mod p et H($d_2$)$^{EID'2}$ mod p, il n'est pas possible de savoir si elles correspondent au même module de sécurité, en d'autres termes si $EID'_1 = EID'_2$. Résoudre un tel problème reviendrait à résoudre le problème décisionnel de Diffie-Hellman (ou « DDH », pour « Decisional Diffie-Hellman » en anglais), réputé difficile. Ainsi, il n'est pas possible de tracer un module de sécurité pour lequel un premier et un deuxième profil ont été générés, le premier profil correspondant à une souscription à un premier opérateur et le deuxième profil à une souscription auprès d'un deuxième opérateur. En effet, il n'est pas possible de corréler des ensembles de valeurs d'identification générés pour un même module de sécurité par des opérateurs différents. Ainsi la propriété de non traçabilité est prouvée mathématiquement.

Dans un exemple de réalisation, tous les calculs, y compris ceux des valeurs d'identification anonymisées, se font sur un sous-groupe cyclique d'une courbe elliptique où le problème décisionnel de Diffie-Hellman est réputé difficile à résoudre. En effet, les courbes elliptiques garantissent un bon niveau de sécurité avec des tailles de clés et des modules plus petits. Par exemple, un modulo p de 256 bits est suffisant.

L'ensemble S des valeurs d'identification anonymisées associé à l'opérateur $MNO_A$ est transmis par le serveur 13 de gestion des données de souscription au serveur de découverte 12 en fin d'étape E2.

L'ensemble S est reçu par le serveur de découverte 12 dans une étape E3 de réception et d'enregistrement. Le serveur de découverte 12 mémorise l'ensemble S des valeurs d'identification anonymisées en association avec une adresse d'un serveur de gestion de l'opérateur $MNO_A$, par exemple l'adresse du serveur 13 de gestion des données de souscription.

Les étapes E0 à E3 sont mises en oeuvre durant une phase de souscription d'un abonnement par l'utilisateur de l'équipement mobile 10 auprès de l'opérateur $MNO_A$. A ce stade, le profil d'accès au réseau de l'opérateur n'est pas encore installé sur le module de sécurité 11 et ne permet donc pas à l'utilisateur de l'équipement mobile 10 d'accéder au réseau mobile de l'opérateur $MNO_A$.

La phase de souscription est suivie d'une phase de demande de profil, destinée à permettre à l'équipement mobile 10 d'obtenir le profil et d'accéder ainsi au réseau de l'opérateur $MNO_A$. Cette demande de profil peut être faite immédiatement après la souscription de l'abonnement, ou pendant les jours qui suivent la souscription. En tout état de cause, le profil ne peut être obtenu au-delà de sa période de validité fixée dans cet exemple à n jours.

Dans une étape E4 d'envoi d'une requête de demande d'adresse d'un serveur, l'utilisateur commande l'envoi, à partir d'une application de l'équipement mobile 10, d'une requête de demande d'adresse d'un serveur de gestion de données de souscription de l'opérateur $MNO_A$ afin d'obtenir le profil d'accès que l'opérateur $MNO_A$ a généré pour lui lors de la phase de souscription. La requête de demande d'adresse est émise par l'équipement mobile 10, plus précisément par le module de sécurité 11 identifié par son identifiant EID. Elle comprend un identifiant anonyme courant $ID_c$, calculé par le module de sécurité 11 en fonction de son identifiant EID et d'une date courante $d_c$. A noter que dans un but de coordination entre le serveur de découverte 12 et l'équipement mobile 10, il est prévu que l'équipement mobile 10 envoie une date courante mesurée par l'équipement mobile 10 au serveur de découverte 12 afin que celui-ci vérifie qu'elle correspond à une date courante mesurée sur le serveur de découverte 12. Cette coordination permet de s'assurer que les deux entités partagent la même date courante et de pallier un cas où la date courante de l'équipement mobile 10 ne serait pas encore paramétrée. En effet, dans ce cas l'équipement mobile 10 enverrait une date par défaut, par exemple le 1er janvier 1970, différente de celle du serveur 12 et inappropriée pour mettre en oeuvre des comparaisons de valeurs d'identification anonymisées. Dans l'exemple décrit ici, la valeur d'identification anonyme courante $ID_c$ du module 11 est calculée comme suit :

$$ID_c = H(d_c)^{EID'} \bmod p$$

A noter que si la requête de demande d'adresse profil est envoyée m jours après la date $d_s$ de souscription, alors $d_c = d_s + m$.

La requête de demande d'adresse d'un serveur est reçue par le serveur de découverte 12 dans une étape E5 de réception.

Dans une étape suivante E6 de recherche, le serveur de découverte 12 recherche la valeur d'identification anonyme courante $ID_c$ dans les ensembles S de valeurs d'identification qu'il a reçus d'opérateurs durant la phase de souscription. A noter que cette étape n'est mise en oeuvre que si les horloges de l'équipement mobile 10 et du serveur de découverte 12 sont cohérentes.

Dans un premier cas où la valeur d'identification anonyme courante $ID_c$ n'est trouvée dans aucun ensemble de valeurs d'identification (branche « nok » sur la figure 1), alors le procédé s'arrête. Ce peut être le cas lorsque la date courante $d_c$ est supérieure à la date finale $d_\varepsilon$, indiquant que la demande d'adresse d'obtention du profil a été émise après la date de validité du profil. Ce peut être le cas également lorsque l'utilisateur n'a pas souscrit d'abonnement : aucun profil n'a été généré par un opérateur pour le module de sécurité 11.

Dans un deuxième cas (branche « ok » sur la figure 1), la valeur d'identification anonyme courante $ID_c$ figure dans la liste S des valeurs d'identification anonymes stockée par le serveur de découverte 12. Cela indique que la requête de demande d'adresse d'un serveur de données de souscription a été émise par le module de sécurité 11 durant la période de validité du profil et que ce profil a été généré et est disponible pour le module de sécurité 11.

Dans une étape E7 de réponse, le serveur de découverte 12 envoie au module de sécurité 11 une réponse qui comprend l'adresse du serveur 13 de gestion des données de souscription de l'opérateur $MNO_A$ auprès duquel le module 11 peut obtenir le profil.

La réponse est reçue par le module 11 dans une étape E8 de réception.

Dans une étape suivante E9 d'obtention du profil, le module de sécurité 11 établit une connexion avec l'opérateur $MNO_A$, plus précisément avec le serveur 13 de gestion des données de souscription de l'opérateur $MON_A$ dont l'adresse figure dans la réponse qu'il a reçue au cours de l'étape E8 afin d'obtenir le profil d'accès au réseau de l'opérateur $MNO_A$. Le profil d'accès est téléchargé sur le module de sécurité 11. L'utilisateur de l'équipement mobile 10 peut alors accéder au réseau mobile de l'opérateur $MNO_A$.

Dans un exemple de réalisation, il est vérifié que la requête de demande d'adresse d'un serveur envoyée au cours de l'étape E4 par le module de sécurité 11 au serveur de découverte 12 est authentique. En d'autres termes, il est vérifié que la requête émane d'un module authentique. A cette fin, le module de sécurité 11 comprend une première clé secrète $sk_1$ propre au module de sécurité 11, à laquelle est associée une clé publique de groupe $pk_G$, certifiée par un certificat de clé publique, par exemple un certificat de type X509.v3. La clé secrète $sk_1$ est destinée à être utilisée par le module 11 pour signer la requête de demande d'adresse d'un serveur envoyée au cours de l'étape E4, par application d'un algorithme de signature de groupe. La clé publique de groupe $pk_G$ est destinée à être utilisée par le serveur de découverte 12 pour vérifier l'authenticité de la requête. « Requête authentique » signifie ici que la requête a été générée par un module de sécurité qui possède une des clés secrètes associée à la clé publique de groupe $pk_G$. En d'autres termes, le module de sécurité qui a signé la requête fait partie d'un groupe pour lequel un certificat a été émis. Les mécanismes de signature de groupe sont supposés connus. On rappelle ici que la vérification d'une signature de groupe par le serveur de découverte 12 lui permet de s'assurer que la signature a été générée par un membre du groupe ; cette vérification ne permet cependant pas d'identifier le membre du groupe qui a signé. Dans un exemple de réalisation, le groupe est constitué de l'ensemble des modules de sécurité qui sont fabriqués par un même encarteur. On suppose que la première clé secrète $sk_1$ est installée en usine dans le module de sécurité 11. Ainsi, le module de sécurité 11 est authentifié de façon anonyme par le serveur de découverte 12.

Dans un exemple de réalisation, le schéma de signature de groupe est défini comme suit : soient trois groupes cycliques $G_1$, $G_2$ et $G_T$ d'ordre premier p et un couplage bilinéaire e : $G_1$ x $G_2 \rightarrow G_T$ de type 3. Soient h et g deux générateurs de $G_1$ et o un générateur de $G_2$. Un fabricant de modules de sécurité, ou un encarteur, joue le rôle de gestionnaire de groupe et possède de ce fait une clé privée constituée du triplet $(x_0, x_1, x_2)$. La clé publique $pk_G$ associée à cette clé privée est : $(X_1 = h^{x1} \bmod p, X_2 = h^{x2} \bmod p, O_0 = o^{x0} \bmod p, O_1 = o^{x1} \bmod p, O_2 = o^{x2} \bmod p)$. Le gestionnaire de groupe installe dans le module de sécurité 11 un certificat de groupe $\sigma = (u, u' = u^{x0+EID'x_1+sx_2} \bmod p)$, où u est choisi aléatoirement et où s est un secret du module 11.

Pour générer une signature de groupe, le module de sécurité 11 randomise d'abord son certificat de groupe en calculant $\sigma_r = (w = u^r \bmod p, w' = (u')^r \bmod p)$, où r est choisi aléatoirement. Par la suite, il choisit trois valeurs aléatoires $z_1$, $z_2$ et $z_3$ puis calcule les valeurs suivantes : $c_1 = w^{EID'} h^{z1} \bmod p$, $c_2 = w^s h^{z2} \bmod p$, $c' = w' g^{z3} \bmod p$ et

$$V = g^{-z_3} X_1^{z_1} X_2^{z_2} \bmod p$$

La signature de groupe de la valeur $Id_c = H(d_c)^{EID'}$ est $\omega = (w, c_1, c_2, c', V, \pi)$, où $\pi$ est une preuve de connaissance sans divulgation de connaissance «ZKPK» (de l'anglais « Zero Knowledge Proof of Knowledge ») définie comme suit :

$$\pi = \text{PoK } [\alpha, \beta, \gamma, \lambda, \varphi : c_1 = w^\alpha h^\gamma \bmod p \wedge c_2 = w^\beta h^\lambda \wedge V = g^{-\varphi} X_1^\gamma X_2^\lambda \wedge Id_c = H(d_c)^\alpha]$$

où $\alpha, \beta, \gamma, \lambda$ et $\varphi$ correspondent à des valeurs secrètes connues par le module 11 et dont il veut prouver la connaissance. La notation $\pi = \text{PoK } [\alpha, \beta :$ déclaration concernant $\alpha$ et $\beta]$ est utilisée pour prouver la connaissance des secrets $(\alpha, \beta)$ qui satisfont une certaine déclaration sans rien révéler de plus à propos des secrets. Grâce à cette preuve classique, le module de sécurité 11 prouve qu'il connaît les valeurs secrètes EID', s, $z_1$, $z_2$ et $z_3$ sans rien révéler de plus.

Pour vérifier la signature de groupe, notamment que le module 11 possède bien un certificat de groupe valide et les secrets associés, le serveur de découverte 12 calcule et vérifie d'abord que : $e(w, O_o).e(c_1, O_1).e(c_2, O_2).e(c', o)^{-1} = e(V, o)$. Par la suite, il vérifie la validité de la preuve $\pi$.

Ce schéma de signature de groupe est adapté aux capacités de calcul limitées des module de sécurité de type cartes (e)SIM. En effet, le schéma proposé est beaucoup moins complexe en termes de capacités de calcul requises et offre de meilleures performances en termes de temps de calcul que les schémas de signature de groupe classiques.

Dans un autre exemple de réalisation un canal sécurisé est établi entre le module de sécurité 11 et le serveur 13 de gestion des données de souscription lors de l'étape E9 d'obtention du profil. Par exemple, le module de sécurité dispose d'une deuxième clé privée sk2 associée à une clé publique pk2 certifiée par un certificat de clé publique.

L'établissement du canal sécurisé entre le serveur 13 de gestion des données de souscription et le module de sécurité 11 est supposé connu et n'est pas détaillé ici.

Dans l'exemple décrit ici, les éléments de l'ensemble S des valeurs d'identification anonymisées et l'identifiant courant $ID_c$ du module de sécurité 11 sont calculés en appliquant une fonction de hachage H à une date d et en élevant la valeur obtenue à la puissance de l'identifiant dérivé EID' du module 11, module le nombre premier p. Dans un autre exemple de réalisation, l'ensemble S est calculé comme suit :

$S = \{H((EID"\oplus opad) \| H((EID"\oplus ipad) \| d_s))), H((EID"\oplus opad) \| H((EID"\oplus ipad) \| d_s + 1))), ..., H((EID"\oplus opad) \| H((EID"\oplus ipad) \| d_s + n)))\}$, où

« || » représente l'opérateur de concaténation, EID" un identifiant obtenu en ajoutant des '0' à EID' afin d'obtenir un identifiant de la taille d'un bloc de la fonction de hachage H. En d'autres termes EID" = EID' || 00..00. ipad et opad sont construits en répétant respectivement les octets '0x36' et '0x5c' jusqu'à l'obtention d'un bloc de la fonction de hachage H. L'identifiant courant $ID_c$ est calculé dans ce cas de la même façon pour la date courante $d_c$ : $ID_c = H((EID" \oplus opad) \| H((EID"\oplus ipad) \| d_c)))$.

Ce mode de calcul présente l'avantage d'offrir de meilleures performances en termes de temps de calcul puisque les calculs sont moins complexes que ceux mis en oeuvre dans l'exemple de réalisation décrit précédemment. Par ailleurs, les propriétés de sécurité sont vérifiées : trouver l'identifiant EID' associé à un module de sécurité et identifier que deux valeurs d'identification anonymisées sont relatives à un même module de sécurité reste un problème difficile à résoudre.

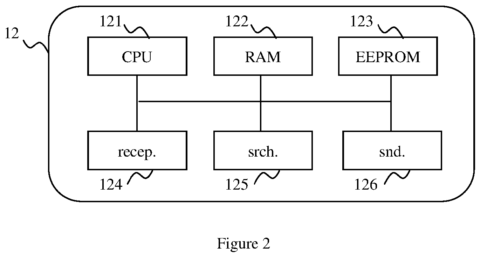

Un serveur de découverte, selon un exemple de réalisation, va maintenant être décrit en relation avec la figure 2.

Le serveur de découverte 12 est un équipement informatique, accessible depuis un réseau de données tel que le réseau Internet. Il comprend :

- une unité de traitement ou processeur 121, ou "CPU" (de l'anglais "Central Processing Unit"), destinée à charger des instructions en mémoire, à les exécuter, à effectuer des opérations ;
- un ensemble de mémoires, dont une mémoire volatile 122, ou "RAM" (pour "Random Access Memory") utilisée pour exécuter des instructions de code, stocker des variables, etc., et une mémoire de stockage 123 de type « EEPROM » (de l'anglais « Electrically Erasable Programmable Read Only Memory »). En particulier, la mémoire de stockage 123 est agencée pour mémoriser un module logiciel d'identification anonyme d'un module de sécurité qui comprend des instructions de code pour mettre en oeuvre les étapes du procédé d'identification anonyme d'un module de sécurité tel que décrit précédemment.

Le serveur de découverte comprend également :

- un module de réception 124, agencé pour recevoir en provenance du module de sécurité 11 et via l'équipement mobile 10, une demande d'adresse du serveur de gestion de données de souscription de l'opérateur auprès duquel une souscription a été prise. La demande comprend une valeur d'identification courante $ID_c$ du module calculée à partir de l'identifiant du module de sécurité 11 et de la date courante $d_c$. Le module 124 est agencé pour mettre en oeuvre l'étape E5 du procédé d'identification anonyme d'un module tel que décrit précédemment ;
- un module de recherche 125, agencé pour rechercher la valeur d'identification courante $ID_c$ reçue du module de sécurité 11 dans au moins un ensemble S de valeurs d'identification. Un ensemble S de valeurs d'identification est reçu d'un opérateur dès lors qu'un abonnement est souscrit auprès de cet opérateur. L'ensemble S comprend pour un module donné, une pluralité de valeurs d'identification anonymisées, une valeur d'identification de l'ensemble étant calculée en fonction de l'identifiant du module et d'une date, la date variant pour la pluralité de valeurs d'identification de l'ensemble entre une date initiale $d_s$ et une date finale $d_f$. L'ensemble S de valeurs d'identification anonymisées est stocké par le serveur de découverte 12 en association avec l'adresse d'un serveur de l'opérateur auprès duquel le profil peut être obtenu. Le module de recherche 125 est agencé pour mettre en oeuvre l'étape E6 du procédé d'identification anonyme d'un module de sécurité tel que décrit précédemment ;
- un module d'envoi 126, agencé pour envoyer au module de sécurité 11 l'adresse du serveur de gestion de données de souscription de l'opérateur lorsque la valeur d'identification courante $ID_c$ figure dans l'ensemble des valeurs d'identification. Le module d'envoi 126 est agencé pour mettre en oeuvre l'étape E7 du procédé décrit précédemment.

Dans un exemple de réalisation, le serveur de découverte 12 comprend également :

- un deuxième module de réception (non représenté sur la figure 2), agencé pour recevoir en provenance du serveur de gestion des données de souscription de l'opérateur, l'ensemble S des valeurs d'identification du module de sécurité et pour associer cet ensemble à l'adresse du serveur de gestion des données de souscription de l'opérateur auprès duquel le profil peut être obtenu. Le deuxième module de réception est agencé pour mettre en oeuvre l'étape E3 du procédé d'identification anonyme d'un module de sécurité tel que décrti précédemment.

Les modules de réception 124, de recherche 125, d'envoi 126, et le deuxième module de réception sont de préférence des modules logiciels comprenant des instructions logicielles pour mettre en oeuvre les étapes du procédé d'identification anonyme d'un module de sécurité précédemment décrit.

L'invention concerne donc aussi :

- un programme d'ordinateur comportant des instructions pour la mise en oeuvre du procédé d'identification anonyme d'un module de sécurité tel que décrit précédemment lorsque ce programme est exécuté par un processeur du serveur de découverte 12,
- un support d'enregistrement lisible sur lequel est enregistré le programme d'ordinateur décrit ci-dessus.

L'invention concerne également un système d'identification anonyme qui comprend un serveur de découverte 12 tel que décrit précédemment, un équipement mobile muni d'un module de sécurité 11 et un serveur 13 de gestion de données de souscription de l'opérateur. L'équipement mobile est agencé pour envoyer au serveur de découverte 12 une demande d'adresse d'un serveur de gestion des données de souscription de l'opérateur, pour recevoir en réponse l'adresse dudit serveur de gestion, et pour se connecter au serveur de gestion afin d'obtenir le profil. Le serveur de gestion de données de souscription de l'opérateur est agencé pour envoyer au serveur de découverte 12 une liste de valeurs d'identification anonymisées du module qu'il a calculée et pour fournir à l'équipement mobile comprenant le module de sécurité le profil qu'il a généré pour le module durant une phase de souscription.

**Revendications**

**1.** Procédé d'obtention d'une adresse de serveur de gestion de données de souscription d'un opérateur agencé pour permettre le téléchargement d'un profil d'accès à un réseau par un module de sécurité (11) équipant un équipement mobile (10), ledit procédé comprenant :

- envoi (E4), par le module de sécurité (11), après la fourniture (E0) par un utilisateur de l'équipement mobile audit opérateur puis la transmission à un serveur (13) de gestion de données de souscription dudit opérateur d'un identifiant du module de sécurité (EID) à une date ($d_s$) de souscription d'un abonnement auprès dudit opérateur, d'une requête de demande d'adresse d'un serveur de gestion de données de souscription de l'opérateur à un deuxième serveur (12), ladite requête comprenant un identifiant anonyme courant ($ID_c$), calculé par le module de sécurité en fonction de son identifiant (EID) et d'une date courante ($d_c$), ledit deuxième serveur étant en charge de rechercher ledit identifiant anonyme courant dans au moins un ensemble (S) de valeurs d'identification anonymisées, ledit ensemble (S) étant associé à un opérateur et comprenant pour un module de sécurité donné, une pluralité de valeurs d'identification anonymisées, une desdites valeurs d'identification anonymisées étant calculée en fonction de l'identifiant du module de sécurité et d'une date variant dans une plage temporelle comprise entre une date initiale (ds), représentative de la date de souscription de l'abonnement auprès de l'opérateur et une date finale (df) représentative de la fin de validité du profil d'accès au réseau associé à l'abonnement souscrit

- réception (E8), par le module de sécurité (11), en provenance du deuxième serveur (12) de l'adresse du serveur de gestion de données de souscription de l'opérateur.

**2.** Procédé de transmission par un serveur de gestion de données de souscription d'un opérateur d'au moins un ensemble de valeurs d'identification anonymisées associé à un opérateur pour un module de sécurité, ledit procédé mis en oeuvre par le serveur de gestion de données de souscription comprenant :

- obtention (E0) d'un identifiant d'un module de sécurité à une date de souscription (ds) d'un abonnement auprès de l'opérateur,
- génération (E2) pour ledit module de sécurité d'un ensemble de valeurs d'identification anonymisées (S), une valeur d'identification anonymisée de l'ensemble étant calculée à partir de l'identifiant du module de sécurité et d'une date variant dans une plage temporelle comprise entre une date initiale (ds), représentative de la date de souscription de l'abonnement auprès dudit opérateur, et d'une date finale (df) représentative d'une date de fin de validité d'un profil d'accès au réseau associé à l'abonnement souscrit, et envoi dudit ensemble de valeurs d'identification anonymisées à un deuxième serveur, ledit deuxième serveur étant en charge de vérifier la présence d'une valeur d'identification anonyme courante reçue d'un module de sécurité dans ledit ensemble (S) de valeurs d'identification anonymisées, la présence de ladite valeur d'identification anonyme courante dans ledit ensemble indiquant qu'une requête de demande d'adresse d'un serveur de données de souscription a été émise durant la période de validité d'un profil d'accès à un réseau et déclenchant l'envoi au module de sécurité de l'adresse d'un serveur de gestion de l'opérateur auprès duquel le module de sécurité peut télécharger le profil d'accès au réseau.

**3.** Procédé selon la revendication 1 ou 2 comprenant en outre :

- application, par le module de sécurité, d'un algorithme de signature de groupe paramétré par une clé secrète propre au module de sécurité à la requête de demande d'adresse ;

la signature de la demande d'adresse étant vérifiée par ledit deuxième serveur (12) au moyen d'une clé publique de groupe, associée au moyen d'un certificat de clé publique à un ensemble de modules comprenant au moins ledit module de sécurité.

**4.** Procédé selon l'une des revendications précédentes, dans lequel :

- l'ensemble S de valeurs d'identification anonymisées est généré par le serveur de gestion de données de souscription comme suit :
$S = \{H(d_s)^{EID'} \bmod p, H(d_s + 1)^{EID'} \bmod p, ..., H(d_s + n)^{EID'} \bmod p\}$, où $d_s$ représente la date initiale, $d_s + n$ la date finale $d_f$, EID' un identifiant dérivé de l'identifiant (EID) du module de sécurité, H une fonction de hachage, p un nombre premier très grand.

**5.** Procédé selon la revendication 4, dans lequel l'identifiant anonyme courant reçu a été calculé par le module de sécurité en fonction de l'identifiant (EID) du module de sécurité et d'une date courante $d_c$ comme suit :

$$ID_c = H(d_c)^{EID'} \bmod p.$$

**6.** Procédé selon l'une des revendications 1 à 3, dans lequel l'ensemble S de valeurs d'identification anonymisées est généré par le serveur de gestion de données de souscription comme suit :
$S=\{H((EID''\oplus opad) \| H((EID''\oplus ipad) \| d_s))), H((EID''\oplus opad) \| H((EID''\oplus ipad) \| d_s + 1 ))), ..., H((EID''\oplus opad) \| H((EID''\oplus ipad) \| d_s + n)))\}$, où « $\|$ » représente l'opérateur de concaténation, EID'' un identifiant obtenu en ajoutant des '0' à un identifiant dérivé EID' de l'identifiant (EID) du module de sécurité afin d'obtenir un identifiant de la taille d'un bloc de la fonction de hachage H, ipad et opad sont construits en répétant respectivement les octets '0x36' et '0x5c' jusqu'à l'obtention d'un bloc de la fonction de hachage H.

**7.** Procédé selon la revendication 6, dans lequel l'identifiant courant $ID_c$ a été calculé par le module de sécurité pour une date courante $d_c$ comme suit : $ID_c = H((EID'' \oplus opad) \| H((EID''\oplus ipad) \| d_c )))$.

**8.** Procédé selon la revendication 4 ou 5, dans lequel l'identifiant dérivé EID' de l'identifiant (EID) du module de sécurité comporte au moins 160 bits.

**9.** Procédé selon la revendication 4 ou 5, dans lequel l'identifiant dérivé EID' de l'identifiant (EID) du module de sécurité est obtenu en concaténant l'identifiant (EID) du module de sécurité à une valeur aléatoire comprenant le nombre de bits requis.

**10.** Module de sécurité (11) configuré pour équiper un équipement mobile (10) comprenant :

- des moyens d'envoi, après la fourniture par un utilisateur de l'équipement mobile à un opérateur puis la transmission à un serveur de gestion de données de souscription dudit opérateur d'un identifiant du module de sécurité (EID) à une date ($d_s$) de souscription d'un abonnement auprès dudit opérateur, d'une requête de demande d'adresse d'un serveur de gestion de données de souscription de l'opérateur à un deuxième serveur (12), ladite requête comprenant un identifiant anonyme courant ($ID_c$) calculé par le module de sécurité en fonction de son identifiant (EID) et d'une date courante ($d_c$), ledit deuxième serveur étant en charge de rechercher ledit identifiant anonyme courant dans au moins un ensemble (S) de valeurs d'identification anonymisées, ledit ensemble (S) étant associé à un opérateur et comprenant pour un module de sécurité donné, une pluralité de valeurs d'identification anonymisées, une desdites valeurs d'identification anonymisées étant calculée en fonction de l'identifiant du module de sécurité et d'une date variant dans une plage temporelle comprise entre une date initiale (ds), représentative de la date de souscription d'un abonnement auprès de l'opérateur et une date finale (df) représentative de la fin de validité du profil d'accès au réseau associé à l'abonnement souscrit,

- des moyens de réception, agencés pour recevoir du deuxième serveur, l'adresse du serveur de gestion de données de souscription de l'opérateur.

**11.** Programme d'ordinateur sur un support de données et chargeable dans la mémoire d'un module de sécurité, le programme comprenant des portions de code pour l'exécution des étapes du procédé selon une quelconque des revendications 1, 3 à 9, mises en oeuvre par le module de sécurité lorsque le programme est exécuté sur ledit module.

**12.** Serveur de gestion de données de souscription d'un opérateur comprenant :

- des moyens d'obtention d'un identifiant, agencés pour obtenir un identifiant d'un module de sécurité à une date de souscription ($d_s$) d'un abonnement auprès de l' opérateur,
- des moyens de génération, agencés pour générer pour ledit module de sécurité un ensemble de valeurs d'identification anonymisées (S), une valeur d'identification anonymisée de l'ensemble étant calculée à partir de l'identifiant du module et d'une date variant dans une plage temporelle comprise entre une date initiale ($d_s$), représentative de la date de souscription de l'abonnement auprès dudit opérateur, et d'une date finale (df) représentative d'une date de fin de validité d'un profil d'accès au réseau associé à l'abonnement souscrit,
- des moyens d'envoi, agencés pour envoyer ledit ensemble de valeurs d'identification anonymisées à un deuxième serveur, ledit deuxième serveur étant en charge de vérifier la présence d'une valeur d'identification anonyme courante reçue d'un module de sécurité dans ledit ensemble (S) de valeurs d'identification anonymisées, la présence de ladite valeur d'identification anonyme courante dans ledit ensemble indiquant qu'une requête de demande d'adresse d'un serveur de données de souscription a été émise durant la période de validité du profil d'accès à un réseau et déclenchant l'envoi au module de sécurité de l'adresse d'un serveur de gestion de l'opérateur auprès duquel le module de sécurité peut télécharger le profil d'accès au réseau associé à l'abonnement souscrit.

**13.** Programme d'ordinateur sur un support de données et chargeable dans la mémoire d'un ordinateur, le programme comprenant des portions de code pour l'exécution des étapes du procédé selon une quelconque des revendications 2 à 9, mises en oeuvre par le serveur de gestion de données de souscription lorsque le programme est exécuté sur ledit ordinateur.

**Patentansprüche**

**1.** Verfahren zum Erhalten einer Adresse eines Servers zur Verwaltung von Subskriptionsdaten eines Betreibers, der dafür ausgelegt ist, das Herunterladen eines Profils des Zugangs zu einem Netz durch ein Sicherheitsmodul (11), mit dem ein Mobilgerät (10) ausgerüstet ist, zu gestatten, wobei das Verfahren umfasst:

- Senden (E4), durch das Sicherheitsmodul (11), nach der Bereitstellung (E0), durch einen Benutzer des Mobilgeräts für den Betreiber, und dann der Übertragung, an einen Server (13) zur Verwaltung von Subskriptionsdaten des Betreibers, einer Kennung des Sicherheitsmoduls (EID) an einem Subskriptionsdatum ($d_s$) eines Abonnements bei dem Betreiber, einer Anfrage nach Anforderung einer Adresse eines Servers zur Verwaltung von Subskriptionsdaten des Betreibers an einen zweiten Server (12), wobei die Anfrage eine aktuelle anonyme Kennung ($ID_c$) umfasst, die durch das Sicherheitsmodul in Abhängigkeit von seiner Kennung (EID) und einem aktuellen Datum ($d_c$) berechnet wird, wobei der zweite Server dafür zuständig ist, die aktuelle anonyme Kennung in wenigstens einer Menge (S) von anonymisierten Identifikationswerten zu suchen, wobei die Menge (S) einem Betreiber zugeordnet ist und für ein gegebenes Sicherheitsmodul eine Vielzahl von anonymisierten Identifikationswerten umfasst, wobei einer der anonymisierten Identifikationswerte in Abhängigkeit von der Kennung des Sicherheitsmoduls und einem Datum berechnet wird, das in einem Zeitbereich variiert, der zwischen einem Anfangsdatum (ds), das für das Subskriptionsdatum des Abonnements bei dem Betreiber repräsentativ ist, und einem Enddatum (df), das für das Ende einer Gültigkeit des Profils des Zugangs zu dem Netz, das dem erworbenen Abonnement zugeordnet ist, repräsentativ ist, liegt,
- Empfang (E8), durch das Sicherheitsmodul (11), von dem zweiten Server (12), der Adresse des Servers zur Verwaltung von Subskriptionsdaten des Betreibers.

**2.** Verfahren zur Übertragung, durch einen Server zur Verwaltung von Subskriptionsdaten eines Betreibers, wenigstens einer Menge von einem Betreiber zugeordneten anonymisierten Identifikationswerten für ein Sicherheitsmodul, wobei das Verfahren, das durch den Server zur Verwaltung von Subskriptionsdaten durchgeführt wird, Folgendes umfasst:

- Erhalten (E0) einer Kennung eines Sicherheitsmoduls an einem Subskriptionsdatum (ds) eines Abonnements bei dem Betreiber,
- Erzeugung (E2), für das Sicherheitsmodul, einer Menge von anonymisierten Identifikationswerten (S), wobei ein anonymisierter Identifikationswert der Menge anhand der Kennung des Sicherheitsmoduls und eines Datums berechnet wird, das in einem Zeitbereich variiert, der zwischen einem Anfangsdatum (ds), das für das Subskriptionsdatum des Abonnements bei dem Betreiber repräsentativ ist, und einem Enddatum (df), das für ein Datum eines Endes einer Gültigkeit eines Profils des Zugangs zu dem Netz, das dem erworbenen Abonnement zugeordnet ist, repräsentativ ist, liegt, und Senden der Menge von anonymisierten Identifikationswerten an einen zweiten Server, wobei der zweite Server dafür zuständig ist, das Vorhandensein eines aktuellen anonymen Identifikationswerts, der von einem Sicherheitsmodul empfangen wird, in der Menge (S) von anonymisierten Identifikationswerten zu überprüfen, wobei das Vorhandensein des aktuellen anonymen Identifikationswerts in der Menge angibt, dass während der Gültigkeitsperiode eines Profils des Zugangs zu einem Netz eine Anfrage nach Anforderung einer Adresse eines Servers für Subskriptionsdaten ausgegeben wurde, und auslöst, dass die Adresse eines Verwaltungsservers des Betreibers, unter der das Sicherheitsmodul das Profil des Zugangs zu dem Netz herunterladen kann, an das Sicherheitsmodul gesendet wird.

3. Verfahren nach Anspruch 1 oder 2, welches außerdem umfasst:

   - Anwendung, durch das Sicherheitsmodul, eines Gruppensignaturalgorithmus, der durch einen geheimen Schlüssel parametriert ist, der dem Sicherheitsmodul eigen ist, auf die Anfrage nach Anforderung einer Adresse;

   wobei die Signatur der Anforderung nach einer Adresse durch den zweiten Server (12) mittels eines öffentlichen Gruppenschlüssels überprüft wird, der mittels eines öffentlichen Schlüsselzertifikats einer Menge von Modulen zugeordnet ist, die wenigstens das Sicherheitsmodul umfasst.

4. Verfahren nach einem der vorhergehenden Ansprüche, wobei:

   - die Menge S von anonymisierten Identifikationswerten durch den Server zur Verwaltung von Subskriptionsdaten wie folgt erzeugt wird:
   $S = \{H(d_s)^{EID'} \bmod p, H(d_s + 1)^{EID'} \bmod p, ..., H(d_s + n)^{EID'} \bmod p\}$, wobei $d_s$ das Anfangsdatum ist, $d_s + n$ das Enddatum $d_f$ ist, EID' eine von der Kennung (EID) des Sicherheitsmoduls abgeleitete Kennung ist, H eine Hashfunktion ist, p eine sehr große Primzahl ist.

5. Verfahren nach Anspruch 4, wobei die empfangene aktuelle anonyme Kennung durch das Sicherheitsmodul in Abhängigkeit von der Kennung (EID) des Sicherheitsmoduls und einem aktuellen Datum $d_c$ wie folgt berechnet wurde:

$$ID_c = H(d_c)^{EID'} \bmod p.$$

6. Verfahren nach einem der Ansprüche 1 bis 3, wobei die Menge S von anonymisierten Identifikationswerten durch den Server zur Verwaltung von Subskriptionsdaten wie folgt erzeugt wird:
   $S=\{H((EID'' \oplus opad) \| H((EID'' \oplus ipad) \| d_s))), H((EID'' \oplus opad) \| H((EID'' \oplus ipad) \| d_s + 1 ))), ..., H((EID'' \oplus opad) \| H((EID'' \oplus ipad) \| d_s + n)))\}$, wobei "$\|$" der Verkettungsoperator ist, EID" eine Kennung ist, die durch das Hinzufügen von mehreren '0' zu einer abgeleiteten Kennung EID' der Kennung (EID) des Sicherheitsmoduls erhalten wird, um eine Kennung mit der Größe eines Blocks der Hashfunktion H zu erhalten, ipad und opad gebildet werden, indem die Bytes '0x36' bzw. '0x5c' so lange wiederholt werden, bis ein Block der Hashfunktion H erhalten wird.

7. Verfahren nach Anspruch 6, wobei die aktuelle Kennung $ID_c$ durch das Sicherheitsmodul für ein aktuelles Datum $d_c$ wie folgt berechnet wurde: $ID_c = H((EID''^{®} opad) \| H((EID'' \oplus ipad) \| d_c )))$.

8. Verfahren nach Anspruch 4 oder 5, wobei die abgeleitete Kennung EID' der Kennung (EID) des Sicherheitsmoduls wenigstens 160 Bits beinhaltet.

9. Verfahren nach Anspruch 4 oder 5, wobei die abgeleitete Kennung EID' der Kennung (EID) des Sicherheitsmoduls durch das Verketten der Kennung (EID) des Sicherheitsmoduls mit einem Zufallswert, der die erforderliche Anzahl von Bits umfasst, erhalten wird.

**10.** Sicherheitsmodul (11), das dazu konfiguriert ist, ein Mobilgerät (10) auszurüsten, umfassend:

- Mittel zum Senden, nach der Bereitstellung, durch einen Benutzer des Mobilgeräts für einen Betreiber, und dann der Übertragung, an einen Server zur Verwaltung von Subskriptionsdaten des Betreibers, einer Kennung des Sicherheitsmoduls (EID) an einem Subskriptionsdatum ($d_s$) eines Abonnements bei dem Betreiber, einer Anfrage nach Anforderung einer Adresse eines Servers zur Verwaltung von Subskriptionsdaten des Betreibers an einen zweiten Server (12), wobei die Anfrage eine aktuelle anonyme Kennung ($ID_c$) umfasst, die durch das Sicherheitsmodul in Abhängigkeit von seiner Kennung (EID) und einem aktuellen Datum ($d_c$) berechnet wird, wobei der zweite Server dafür zuständig ist, die aktuelle anonyme Kennung in wenigstens einer Menge (S) von anonymisierten Identifikationswerten zu suchen, wobei die Menge (S) einem Betreiber zugeordnet ist und für ein gegebenes Sicherheitsmodul eine Vielzahl von anonymisierten Identifikationswerten umfasst, wobei einer der anonymisierten Identifikationswerte in Abhängigkeit von der Kennung des Sicherheitsmoduls und einem Datum berechnet wird, das in einem Zeitbereich variiert, der zwischen einem Anfangsdatum (ds), das für das Subskriptionsdatum eines Abonnements bei dem Betreiber repräsentativ ist, und einem Enddatum (df), das für das Ende einer Gültigkeit des Profils des Zugangs zu dem Netz, das dem erworbenen Abonnement zugeordnet ist, repräsentativ ist, liegt,
- Mittel zum Empfang, die dafür ausgelegt sind, von dem zweiten Server die Adresse des Servers zur Verwaltung von Subskriptionsdaten des Betreibers zu empfangen.

**11.** Computerprogramm auf einem Datenträger, das in den Speicher eines Sicherheitsmoduls ladbar ist, wobei das Programm Codeabschnitte zur Ausführung der Schritte des Verfahrens nach einem der Ansprüche 1, 3 bis 9 umfasst, die durch das Sicherheitsmodul durchgeführt werden, wenn das Programm in dem Modul ausgeführt wird.

**12.** Server zur Verwaltung von Subskriptionsdaten eines Betreibers, umfassend:

- Mittel zum Erhalten einer Kennung, die dafür ausgelegt sind, eine Kennung eines Sicherheitsmoduls an einem Subskriptionsdatum ($d_s$) eines Abonnements bei dem Betreiber zu erhalten,
- Mittel zur Erzeugung, die dafür ausgelegt sind, für das Sicherheitsmodul eine Menge von anonymisierten Identifikationswerten (S) zu erzeugen, wobei ein anonymisierter Identifikationswert der Menge anhand der Kennung des Moduls und eines Datums berechnet wird, das in einem Zeitbereich variiert, der zwischen einem Anfangsdatum ($d_s$), das für das Subskriptionsdatum des Abonnements bei dem Betreiber repräsentativ ist, und einem Enddatum (df), das für ein Datum eines Endes einer Gültigkeit eines Profils des Zugangs zu dem Netz, das dem erworbenen Abonnement zugeordnet ist, repräsentativ ist, liegt,
- Mittel zum Senden, die dafür ausgelegt sind, die Menge von anonymisierten Identifikationswerten an einen zweiten Server zu senden, wobei der zweite Server dafür zuständig ist, das Vorhandensein eines aktuellen anonymen Identifikationswerts, der von einem Sicherheitsmodul empfangen wird, in der Menge (S) von anonymisierten Identifikationswerten zu überprüfen, wobei das Vorhandensein des aktuellen anonymen Identifikationswerts in der Menge angibt, dass während der Gültigkeitsperiode des Profils des Zugangs zu einem Netz eine Anfrage nach Anforderung einer Adresse eines Servers für Subskriptionsdaten ausgegeben wurde, und auslöst, dass die Adresse eines Verwaltungsservers des Betreibers, unter der das Sicherheitsmodul das Profil des Zugangs zu dem Netz, das dem erworbenen Abonnement zugeordnet ist, herunterladen kann, an das Sicherheitsmodul gesendet wird.

**13.** Computerprogramm auf einem Datenträger, das in den Speicher eines Computers ladbar ist, wobei das Programm Codeabschnitte zur Ausführung der Schritte des Verfahrens nach einem der Ansprüche 2 bis 9 umfasst, die durch den Server zur Verwaltung von Subskriptionsdaten durchgeführt werden, wenn das Programm auf dem Computer ausgeführt wird.

**Claims**

**1.** Method for obtaining an address of a subscription data management server of an operator arranged in order to make it possible to download a network access profile for a security module (11) fitted to a mobile equipment (10), said method comprising:

- the security module (11) sending (E4), after the provision by a user of the mobile equipment (E0) to said operator, and then the transmission to a subscription data management server (13) of said operator of an identifier of the security module (EID) on a date ($d_s$) on which a subscription is taken out with said operator, a request for the address of a subscription data management server of the operator to a second server (12), said request comprising a current anonymous identifier ($ID_c$), calculated by the security module as a function of its identifier (EID) and of a current date ($d_c$), said second server being in charge of searching for said current anonymous identifier in at least one set (S) of anonymized identification values, said set (S) being associated with an operator and comprising, for a given security module, a plurality of anonymized identification values, one of said anonymized identification values being calculated as a function of the identifier of the security module and of a date varying within a time range between an initial date (ds), representative of the date on which the subscription is taken out with the operator, and a final date (df), representative of the end of the validity of the network access profile associated with the subscription taken out

- the security module (11) receiving (E8), from the second server (12), the address of the subscription data management server of the operator.

2. Method for a subscription data management server of an operator to transmit at least one set of anonymized identification values which is associated with an operator for a security module, said method implemented by the subscription data management server comprising:

- obtaining (E0) an identifier of a security module on a date (ds) on which a subscription is taken out with the operator,
- generating (E2), for said security module, a set of anonymized identification values (S), an anonymized identification value in the set being calculated on the basis of the identifier of the security module and of a date varying within a time range between an initial date (ds), representative of the date on which the subscription is taken out with said operator, and a final date (df), representative of a date of the end of the validity of a network access profile associated with the subscription taken out, and sending said set of anonymized identification values to a second server, said second server being in charge of verifying the presence of a current anonymous identification value received from a security module in said set (S) of anonymized identification values, the presence of said current anonymous identification value in said set indicating that a request for the address of a subscription data server was transmitted during the period of validity of a network access profile and triggering the sending, to the security module, of the address of a management server of the operator from which the security module may download the network access profile.

3. Method according to Claim 1 or 2, further comprising:

- the security module applying a group signature algorithm parametrized by a private key specific to the security module on the address request;

the signature of the address request being verified by said second server (12) by means of a group public key, associated, by means of a public key certificate, with a set of modules comprising at least said security module.

4. Method according to one of the preceding claims, wherein:

- the set S of anonymized identification values is generated by the subscription data management server as follows:
$S = \{H(d_s)^{EID'} \bmod p, H(d_s + 1)^{EID'} \bmod p, ..., H(d_s + n)^{EID'} \bmod p\}$, where $d_s$ represents the initial date, $d_s + n$ the final date $d_f$, EID' an identifier derived from the identifier (EID) of the security module, H a hash function, p a very large prime number.

5. Method according to Claim 4, wherein the received current anonymous identifier was calculated by the security module as a function of the identifier (EID) of the security module and of a current date $d_c$ as follows:

$$ID_c = H(d_c)^{EID'} \bmod p.$$

6. Method according to one of Claims 1 to 3, wherein the set S of anonymized identification values is generated by the subscription data management server as follows:
$S = \{ ((EID'' \oplus opad) \parallel H((EID'' \oplus ipad) \parallel d_s))), H((EID'' \oplus opad) \parallel H((EID'' \oplus ipad) \parallel d_s + 1 ))), ..., H((EID'' \oplus) opad) \parallel H((EID'' \oplus ipad) \parallel d_s + n)))\}$, where "$\parallel$" represents the concatenation operator, EID" an identifier obtained by adding '0' to an identifier EID' derived from the identifier (EID) of the security module in order to obtain an identifier of the size of a block of the hash function H, ipad and opad are constructed by repeating the bytes '0x36' and '0x5c' respectively until a block of the hash function H is obtained.

7.  Method according to Claim 6, wherein the current identifier $ID_c$ was calculated by the security module for a current date $d_c$ as follows: $ID_c = H((EID'' \oplus opad) \,|\,|\, H((EID'' \oplus ipad) \,|\,|\, d_c )))$.

8.  Method according to Claim 4 or 5, wherein the identifier EID' derived from the identifier (EID) of the security module comprises at least 160 bits.

9.  Method according to Claim 4 or 5, wherein the identifier EID' derived from the identifier (EID) of the security module is obtained by concatenating the identifier (EID) of the security module with a random value comprising the number of bits required.

10. Security module (11) configured to be fitted to a mobile equipment (10) comprising:

    - means for sending, after the provision by a user of the mobile equipment to an operator, and then the transmission to a subscription data management server of said operator of an identifier of the security module (EID) ona date ($d_s$) on which a subscription is taken out with said operator, a request for the address of a subscription data management server of the operator to a second server (12), said request comprising a current anonymous identifier ($ID_c$), calculated by the security module as a function of its identifier (EID) and of a current date ($d_c$), said second server being in charge of searching for said current anonymous identifier in at least one set (S) of anonymized identification values, said set (S) being associated with an operator and comprising, for a given security module, a plurality of anonymized identification values, one of said anonymized identification values being calculated as a function of the identifier of the security module and of a date varying within a time range between an initial date (ds), representative of the date on which a subscription is taken out with the operator, and a final date (df), representative of the end of the validity of the network access profile associated with the subscription taken out,
    - receiving means, arranged to receive, from the second server, the address of the subscription data management server of the operator.

11. Computer program, on a data medium, which may be loaded into the memory of a security module, the program comprising code portions for executing the steps of the method according to any one of Claims 1 and 3 to 9, implemented by the security module when the program is executed on said module.

12. Subscription data management server of an operator comprising:

    - means for obtaining an identifier, arranged to obtain an identifier of a security module on a date ($d_s$) on which a subscription is taken out with the operator,
    - generating means, arranged to generate, for said security module, a set of anonymized identification values (S), an anonymized identification value in the set being calculated on the basis of the identifier of the module and of a date varying within a time range between an initial date ($d_s$), representative of the date on which the subscription is taken out with said operator, and a final date (df), representative of a date of the end of the validity of a network access profile associated with the subscription taken out,
    - sending means, arranged to send said set of anonymized identification values to a second server, said second server being in charge of verifying the presence of a current anonymous identification value received from a security module in said set (S) of anonymized identification values, the presence of said current anonymous identification value in said set indicating that a request for the address of a subscription data server was transmitted during the period of validity of the network access profile and triggering the sending, to the security module, of the address of a management server of the operator from which the security module may download the network access profile associated with the subscription taken out.

13. Computer program, on a data medium, which may be loaded into the memory of a computer, the program comprising code portions for executing the steps of the method according to any one of Claims 2 to 9, implemented by the subscription data management server when the program is executed on said computer.

Figure 1

Figure 2

**EP 3 651 408 B1**

## RÉFÉRENCES CITÉES DANS LA DESCRIPTION

### Documents brevets cités dans la description

- US 2009253409 A1, SLAVOV KRISTIAN
- US 2013297422 A1, HUNTER KEVIN E